# EUROPEAN PATENT SPECIFICATION

(11) **EP 4 448 841 B1**
(45) Date of publication and mention of the grant of the patent: **04.02.2026**
(21) Application number: 22843131.8
(22) Date of filing: 15.12.2022
(51) Int. Cl.: C25B 1/04, C25B 15/00, C25B 15/08

(54) **AUTOMATIC NITROGEN FILLING AND REPLACING DEVICE FOR HYDROGEN PRODUCTION BY WATER ELECTROLYSIS**
AUTOMATISCHE STICKSTOFFFÜLL- UND AUSTAUSCHVORRICHTUNG ZUR WASSERSTOFFPRODUKTION DURCH WASSERELEKTROLYSE
DISPOSITIF AUTOMATIQUE DE REMPLISSAGE ET DE REMPLACEMENT D'AZOTE DESTINÉ À LA PRODUCTION D'HYDROGÈNE PAR ÉLECTROLYSE DE L'EAU

(30) Priority: 15.12.2021 CN 202123157913 U
(43) Date of publication of application: 23.10.2024
(73) Proprietor: John Cockerill Hydrogen Belgium, 4100 Seraing (BE)
(72) Inventor: ZHAO, Xiaoliang, Luoyang, Henan (CN); SUN, Jiankang, Suzhou, (CN); FU, Rao, Suzhou, (CN); LIU, Zilong, vieille ville Comté de Changtu province du Liaoning (CN)
(74) Representative: Cabinet Boettcher
(86) International application number: PCT/EP2022/086146
(87) International publication number: WO 2023/111175

(56) References cited:
- CN-A- 111 455 401
- CN-A- 113 005 470
- DE-A1- 3 603 244

## Description

### TECHNICAL FIELD

The invention relates to the technical field of water electrolysis hydrogen production, in particular to an automatic nitrogen-charging replacement device for water electrolysis hydrogen production.

### BACKGROUND ART

The alkaline water electrolysis hydrogen production device is provided with two gas separators, wherein the lower half part of the separator is filled with alkaline liquor and the upper half part of the separator is filled with gas under the working state. Hydrogen generated by electrolysis of the electrolytic cell enters the hydrogen separator along with alkali liquor, and oxygen generated by electrolysis enters the oxygen separator along with oxygen. The anode and the cathode in each small chamber of the electrolytic cell are separated by a diaphragm, water and ions can pass through the diaphragm, gas cannot pass through the diaphragm, and the diaphragm is very sensitive to the pressure difference on two sides, so that the hydrogen separator is connected with the bottom of the oxygen separator through a communicating pipe, and the liquid level difference on two sides is the pressure difference born by the diaphragm of the electrolytic cell. And the alkali liquor in the separator has the function of liquid seal.

Before water electrolysis hydrogen production, air in a container for storing hydrogen and oxygen needs to be discharged, otherwise, after the hydrogen or the oxygen is mixed with the air, ignition is easy to cause explosion. Therefore, it is necessary to easily replace the stored hydrogen gas and oxygen gas and replace the air with the inert gas nitrogen gas. When the hydrogen production equipment does not operate for a long time, in order to prevent hydrogen/oxygen from entering a separator at the other side through a communicating pipe due to liquid level conversion at two sides caused by factors such as internal leakage of a rear end valve and the like, so that danger is generated due to mixed explosion of hydrogen and oxygen; when the equipment needs to be overhauled, the hydrogen/oxygen in the equipment needs to be replaced by inert gas nitrogen.

Conventionally used nitrogen gas replacement device, it is comparatively simple to set up, constitute by a check valve and a stop valve, the setting is violently managed on the level, only rely on a root of pipe to replace, need on-the-spot manual operation, and in order to maintain both sides liquid level balance, need control very slow nitrogen filling speed (fill nitrogen at every turn and need several hours), if liquid level difference too big still needs manual adjustment oxyhydrogen export bypass valve evacuation, otherwise, certain side liquid level return to zero hydrogen/oxygen can get into the opposite side container through the siphunculus, the oxyhydrogen mixes and takes place danger. With the continuous provision of automation level of the equipment, the traditional nitrogen filling mode is not suitable for the operation requirement of the equipment.

In order to solve the above problems, it is necessary to provide an automatic nitrogen-charging replacement device for hydrogen production by water electrolysis.

### DISLOSURE

### SUMMERY OF THE UTILITY MODEL

In order to solve the technical problem, the technical scheme provides an automatic nitrogen replacement device that fills of water electrolysis hydrogen manufacturing, the nitrogen replacement device that conventionally used that proposes among the above-mentioned background art has been solved to this technical scheme, it is comparatively simple to set up, constitute by a check valve and a stop valve, the setting is on the flat horizontal pipe, need on-the-spot manual operation, and in order to maintain the liquid level balance of both sides, need control very slow nitrogen filling speed (filling at every turn needs several hours), if the liquid level difference is too big still need manual adjustment oxyhydrogen export bypass valve to empty, otherwise, certain side liquid level zero return hydrogen/oxygen can get into opposite side container through the communicating pipe, the mixed dangerous problem that takes place of oxyhydrogen.

In order to achieve the above purposes, the technical scheme adopted by the invention is as follows:
the invention provides an automatic nitrogen replacement device that fills of water electrolysis hydrogen manufacturing, includes nitrogen gas import and pipeline, the nitrogen gas import has the check valve through the pipeline intercommunication, and the check valve has two flowmeters through the pipeline intercommunication, and the pipeline bifurcation of intercommunication check valve and flowmeter sets up to two ways, and the flowmeter has the solenoid valve through the pipeline intercommunication, and the solenoid valve has a pressure reducer, a left side through the pipeline intercommunication the pressure reducer has the oxygen separator, the right side through the pipeline intercommunication the pressure reducer has the hydrogen separator, and hydrogen separator and oxygen separator inside below all fill have alkaline liquid.

Preferably, the oxygen separator and the hydrogen separator are both arranged behind the electrolytic cell, the oxygen separator and the hydrogen separator are hollow, and the bottoms of the oxygen separator and the hydrogen separator are communicated with a gas-alkali outlet of the electrolytic cell.

Preferably, a plurality of polar plates are arranged in the electrolytic cell, one side of each polar plate in the electrolytic cell is an anode, the other side of each polar plate in the electrolytic cell is a cathode, the oxygen separator is arranged behind an outlet where the anodes are gathered, and the hydrogen separator is arranged behind an outlet where the cathodes are gathered.

The interior of the electrolytic cell is filled with an alkaline liquid.

Preferably, a communicating pipe is fixedly connected between the bottoms of the oxygen separator and the hydrogen separator.

Preferably, the left side of the oxygen separator is fixedly connected with an adjusting valve bank, and the right side of the hydrogen separator is fixedly connected with an adjusting valve bank.

Compared with the prior art, the invention provides an automatic nitrogen-charging replacement device for hydrogen production by water electrolysis, which has the following beneficial effects:
by arranging two pressure reducers, two electromagnetic valves and two flowmeters, when in use, only a remote signal is needed to control the nitrogen charging automatic valve to be opened, so that nitrogen enters the device from the nitrogen inlet, the automatic nitrogen charging valve is closed after the system pressure reaches a set value A, the flow rates of both sides can be adjusted through the throttling device (pressure reducer, etc.), the flow rates of both sides can be equal through the flow meter reading adjusting throttling device (pressure reducer, etc.) during debugging, thereby ensuring that the liquid level difference in the oxygen separator and the hydrogen separator is kept in a proper range, avoiding the mixing of oxygen and hydrogen, meanwhile, the replacement speed can be ensured without deliberately slowing down the nitrogen entering speed, in addition, the device can be remotely and automatically controlled, field operation is not needed, nitrogen charging replacement operation is automatically completed by one key, the automation degree of equipment is improved, and risks caused by misoperation of personnel are reduced.

### DRAWINGS DESCRIPTION

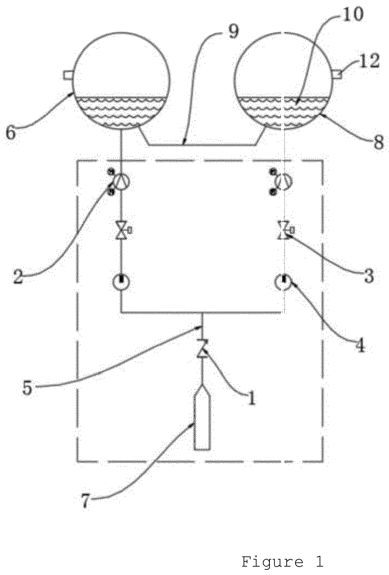

FIG. 1 is a schematic structural view of the present invention;

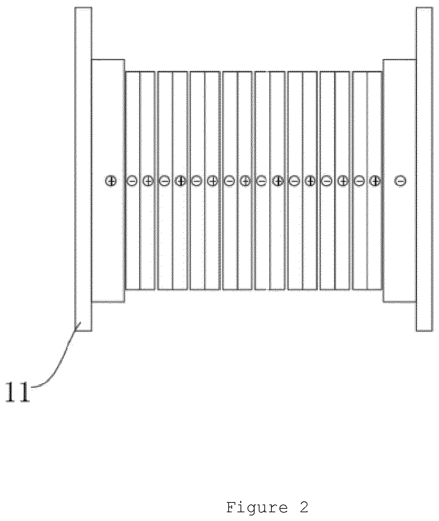

FIGS. 1 and 2 are a schematic view of the electrolytic cell of the present invention.

The reference numbers in the figures are:
1. a check valve; 2. a pressure reducer; 3. an electromagnetic valve; 4. a flow meter; 5. a pipeline; 6. an oxygen separator; 7. a nitrogen inlet; 8. a hydrogen separator; 9. a communicating pipe; 10. an alkaline liquid; 11. an electrolytic cell; 12. and an adjusting valve group.

### INVENTION MODE

### DETAILED DESCRIPTION

The following description is presented to disclose the invention so as to enable any person skilled in the art to practice the invention.

Referring to fig. 1-2, an automatic nitrogen-filling replacement device for hydrogen production by water electrolysis comprises a nitrogen inlet 7 and a pipeline 5, wherein the nitrogen inlet 7 is communicated with a check valve 1 through the pipeline 5, the check valve 1 is communicated with two flowmeters 4 through the pipeline 5, the pipeline 5 communicating the check valve 1 and the flowmeters 4 is branched into two paths, the flowmeters 4 are communicated with an electromagnetic valve 3 through the pipeline 5, the electromagnetic valve 3 is communicated with a pressure reducer 2 through the pipeline 5, the pressure reducer 2 on the left side is communicated with an oxygen separator 6 through the pipeline 5, the pressure reducer 2 on the right side is communicated with a hydrogen separator 8 through the pipeline 5, and alkaline liquid 10 is filled below the insides of the hydrogen separator 8 and the oxygen separator 6; the electromagnetic valve 3 is controlled by remote signals to be opened simultaneously to realize simultaneous nitrogen charging at two sides at the same speed, so that nitrogen is charged into the device from a nitrogen inlet 7, the nitrogen passes through the check valve 1, the check valve 1 is used for preventing liquid in the separator from flowing back to a nitrogen system, the pressure of the pressure reducer 2 is controlled, the flow of the two sides is kept the same by adjusting the pressure reducer 2 and is at a reasonable and faster flow rate, thereby ensuring that the pressure is the same when the nitrogen is charged at the two sides simultaneously, the liquid levels of the oxygen separator 6 and the hydrogen separator 8 are approximately equal, so that the mixing of hydrogen and oxygen can not occur, the nitrogen enters the oxygen separator 6 and the hydrogen separator 8 through the pipeline 5, when the internal pressure of the oxygen separator 6 and the hydrogen separator 8 reaches a given value B, the adjusting valve banks 12 of the oxygen separator 6 and the hydrogen separator 8 are opened, so that the internal air is discharged from the adjusting valve banks 12, when the internal pressure of the oxygen separator 6 and the hydrogen separator 8 reaches a given value C, and (3) closing the regulating valve group 12 so as to replace the air in the oxygen separator 6 and the hydrogen separator 8, and automatically circulating the operations for three times to finish the nitrogen filling replacement process. Specifically, the oxygen separator 6 and the hydrogen separator 8 are both arranged behind the electrolytic cell 11, the oxygen separator 6 and the hydrogen separator 8 are hollow, and the bottoms of the oxygen separator 6 and the hydrogen separator 8 are communicated with a gas-alkali outlet of the electrolytic cell 11.

A plurality of polar plates are arranged in the electrolytic cell 11, one side of the polar plate of the electrolytic cell 11 is an anode, the other side of the polar plate of the electrolytic cell 11 is a cathode, the oxygen separator 6 is arranged behind an outlet where the anodes are gathered, and the hydrogen separator 8 is arranged behind an outlet where the cathodes are gathered. The inside of the electrolytic bath 11 is filled with an alkaline liquid 10.

A communicating pipe 9 is fixedly connected between the bottoms of the oxygen separator 6 and the hydrogen separator 8.

The left side of the oxygen separator 6 is fixedly connected with an adjusting valve bank 12, and the right side of the hydrogen separator 8 is fixedly connected with the adjusting valve bank 12.

The working principle and the using process of the utility model are as follows: by arranging the two pressure reducers 2, the two electromagnetic valves 3 and the two flowmeters 4, when in use, only a remote signal is needed to control the nitrogen charging automatic valve to be opened, so that nitrogen enters the device from the nitrogen inlet 7, the automatic nitrogen charging valve is closed after the system pressure reaches a set value A, the flow rates of both sides can be adjusted through the throttling device (the pressure reducer 2 and the like), the flow rates of both sides can be equal through the number indication adjusting throttling device (the pressure reducer 2 and the like) of the flowmeter 4 during debugging, thereby ensuring that the liquid level difference in the oxygen separator 6 and the hydrogen separator 8 is kept in a proper range, avoiding the mixing of oxygen and hydrogen, meanwhile, the replacement speed can be ensured without deliberately slowing down the nitrogen entering speed, in addition, the device can be remotely and automatically controlled, field operation is not needed, nitrogen charging replacement operation is automatically completed by one key, the automation degree of equipment is improved, and risks caused by misoperation of personnel are reduced.

## Claims

1. Water electrolysis hydrogen production device, comprising an electrolytic cell (11), an hydrogen separator(8), an oxygen separator (6), and an automatic nitrogen replacement device, said automatic nitrogen replacement device including nitrogen gas inlet (7) and a pipeline (5), the nitrogen gas inlet (7) communicating with a check valve (1) through the pipeline (5) which is branched into a first path interconnecting the check valve (1) with the hydrogen separator through a first flowmeter (4), a first solenoid valve (3) and a first pressure reducer (2), and a second path interconnecting the check valve (4) with the oxygen separator through a second flowmeter (4), a second solenoid valve (3) and a second pressure reducer (2), and the hydrogen separator (8) and oxygen separator (6) inside below all being filled with an alkaline liquid (10).

2. Device as claimed in claim 1, wherein the oxygen separator (6) and the hydrogen separator (8) are both arranged behind the electrolytic cell (11), the oxygen separator (6) and the hydrogen separator (8) are hollow, and the bottoms of the oxygen separator (6) and the hydrogen separator (8) are in communication with an alkali outlet of the electrolytic cell (11).

3. Device as claimed in claim 2, wherein the electrolytic cell (11) is internally provided with a plurality of polar plates, one side of the polar plate of the electrolytic cell (11) is an anode, the other side of the polar plate of the electrolytic cell (11) is a cathode, the oxygen separator (6) is arranged behind an outlet for collecting the anode, and the hydrogen separator (8) is arranged behind an outlet for collecting the cathode.

4. Device as claimed in claim 3, wherein the interior of the electrolytic cell (11) is filled with an alkaline liquid (10).

5. Device as claimed in claim 1, wherein a communicating pipe (9) is fixedly connected between the bottoms of the oxygen separator (6) and the hydrogen separator (8).

6. Device as claimed in claim 1, wherein: a second side of the oxygen separator (6) is fixedly connected with an adjusting valve bank (12), and a first side of the hydrogen separator (8) is fixedly connected with the adjusting valve bank (12).

## Patentansprüche

1. Vorrichtung zur Wasserstofferzeugung durch Wasserelektrolyse, umfassend eine Elektrolysezelle (11), einen Wasserstoffabscheider (8), einen Sauerstoffabscheider (6) sowie eine automatische Stickstoffaustauschvorrichtung, wobei die automatische Stickstoffaustauschvorrichtung einen Stickstoffgaseinlass (7) und eine Rohrleitung (5) enthält, wobei der Stickstoffgaseinlass (7) über die Rohrleitung (5) mit einem Rückschlagventil (1) in Verbindung steht, und letztere in einen ersten Strömungspfad hinein verzweigt, welcher das Rückschlagventil (1) über einen ersten Durchflussmesser (4), ein erstes Magnetventil (3) und einen ersten Druckminderer (2) mit dem Wasserstoffabscheider verbindet, und in einen zweiten Strömungspfad hinein verzweigt, welcher das Rückschlagventil (1) über einen zweiten Durchflussmesser (4), ein zweites Magnetventil (3) und einen zweiten Druckminderer (2) mit dem Sauerstoffabscheider verbindet, und wobei der Wasserstoffabscheider (8) und der Sauerstoffabscheider (6) in ihrem Inneren im unteren Bereich gleichermaßen mit einer alkalischen Flüssigkeit (10) gefüllt sind.

2. Vorrichtung nach Anspruch 1, wobei der Sauerstoffabscheider (6) und der Wasserstoffabscheider (8) beide hinter der Elektrolysezelle (11) angeordnet sind, wobei der Sauerstoffabscheider (6) und der Wasserstoffabscheider (8) hohl sind und wobei der Boden des Sauerstoffabscheiders (6) und der Boden des Wasserstoffabscheiders (8) mit einem Alkali-Auslass der Elektrolysezelle (11) in Verbindung stehen.

3. Vorrichtung nach Anspruch 2, wobei die Elektrolysezelle (11) innen mit einer Mehrzahl von Polplatten ausgestattet ist, wobei eine Seite der Polplatte der Elektrolysezelle (11) eine Anode ist, wobei die andere Seite der Polplatte der Elektrolysezelle (11) eine Kathode ist, wobei der Sauerstoffabscheider (6) hinter einem Auslass zum anodenseitigen Sammeln angeordnet ist, und der Wasserstoffabscheider (8) hinter einem Auslass zum kathodenseitigen Sammeln angeordnet ist.

4. Vorrichtung nach Anspruch 3, wobei das Innere der Elektrolysezelle (11) mit einer alkalischen Flüssigkeit (10) gefüllt ist.

5. Vorrichtung nach Anspruch 1, wobei ein Verbindungsrohr (9) zwischen dem Boden des Sauerstoffabscheiders (6) und dem Boden des Wasserstoffabscheiders (8) fest verbunden ist.

6. Vorrichtung nach Anspruch 1, wobei eine zweite Seite des Sauerstoffabscheiders (6) mit einer Einstellventilbatterie (12) fest verbunden ist, und eine erste Seite des Wasserstoffabscheiders (8) mit der Einstellventilbatterie (12) fest verbunden ist.

## Revendications

1. Dispositif de production d'hydrogène par électrolyse de l'eau, comprenant une cellule électrolytique, un séparateur d'hydrogène, un séparateur d'oxygène et un dispositif de remplacement automatique de l'azote, ledit dispositif de remplacement automatique de l'azote comprenant une entrée d'azote gazeux (7) et une tuyauterie (5), l'entrée d'azote gazeux (7) communiquant avec un clapet anti-retour (1) à travers la tuyauterie (5) qui est ramifiée en un premier chemin interconnectant le clapet anti-retour (4) avec le séparateur d'hydrogène par l'intermédiaire d'un premier débitmètre (4), une première électrovanne (3) et un premier détendeur (2), et un second chemin reliant le clapet anti-retour (4) au séparateur d'oxygène par l'intermédiaire d'un second débitmètre (4), d'une seconde électrovanne (3) et d'un second détendeur (2), le séparateur d'hydrogène (8) et le séparateur d'oxygène (6) à l'intérieur étant tous remplis d'un liquide alcalin (10).

2. Dispositif selon la revendication 1, dans lequel le séparateur d'oxygène (6) et le séparateur d'hydrogène (8) sont tous deux disposés derrière la cellule électrolytique (11), le séparateur d'oxygène (6) et le séparateur d'hydrogène (8) sont creux, et les fonds du séparateur d'oxygène (6) et du séparateur d'hydrogène (8) sont en communication avec une sortie alcaline de la cellule électrolytique (11).

3. Dispositif selon la revendication 2, dans lequel la cellule électrolytique (11) est équipée intérieurement de plusieurs plaques polaires, un côté de la plaque polaire de la cellule électrolytique (11) est une anode, l'autre côté de la plaque polaire de la cellule électrolytique (11) est une cathode, le séparateur d'oxygène (6) est disposé derrière une sortie pour collecter l'anode, et le séparateur d'hydrogène (8) est disposé derrière une sortie pour collecter la cathode.

4. Dispositif selon la revendication 3, dans lequel l'intérieur de la cellule électrolytique (11) est rempli d'un liquide alcalin (10).

5. Dispositif selon la revendication 1, dans lequel un tuyau de communication (9) est relié de manière fixe entre les fonds du séparateur d'oxygène (6) et du séparateur d'hydrogène (8).

6. Dispositif selon la revendication 1, dans lequel : un deuxième côté du séparateur d'oxygène (6) est relié de manière fixe à un ensemble de vannes de réglage (12), et un premier côté du séparateur d'hydrogène (8) est relié de manière fixe à l'ensemble de vannes de réglage (12).
